# EUROPÄISCHE PATENTSCHRIFT

(11) **EP 1 664 431 B1**
(45) Veröffentlichungstag und Bekanntmachung des Hinweises auf die Patenterteilung: **04.08.2010**
(21) Anmeldenummer: 04765313.4
(22) Anmeldetag: 16.09.2004
(51) Int. Cl.: D21H 21/38, D21H 25/18, C09K 15/00

(54) **ANTIOXIDATIONSMITTEL FÜR ORGANISCHES MATERIAL UND VERFAHREN ZUR BEHANDLUNG DESSELBEN**
ANTIOXIDANT FOR AN ORGANIC MATERIAL AND METHOD FOR TREATING THE SAME
AGENT ANTIOXYDANT POUR UNE MATIERE ORGANIQUE ET PROCEDES DE TRAITEMENT ASSOCIES

(30) Priorität: 16.09.2003 DE 10343047
(43) Veröffentlichungstag der Anmeldung: 07.06.2006
(73) Patentinhaber: ZFB Zentrum für Bucherhaltung GmbH, 04329 Leipzig (DE)
(72) Erfinder: ANDERS, Manfred, 04229 Leipzig (DE); LICHTBLAU, Dirk, Andreas, 06114 Halle/Saale (DE); KOLAR, Jana, 1295 Ivancna Gorica (SI); MALESIC, Jasna, 2250 Ptuj (SI); STRLIC, Matija, 1000 Ljubljana (SI); SALA, Martin, 1230 Domzale (SI); KOEEVAR, Marijan, 1000 Ljubljana (SI)
(74) Vertreter: Müller, Gerald Christian
(86) Internationale Anmeldenummer: PCT/EP2004/010414
(87) Internationale Veröffentlichungsnummer: WO 2005/030906

(56) Entgegenhaltungen:
- DE-A1- 19 921 616
- FR-A- 2 772 042
- US-A- 2 294 723
- US-A- 5 829 449

## Beschreibung

### Anwendungsgebiet

Die vorliegende Erfindung betrifft ein Antioxidationsmittel für organisches Material. Des Weiteren betrifft die vorliegende Erfindung die Verwendung des Antioxidationsmittels zur Behandlung von organischem Material, insbesondere Papier, sowie ein Verfahren zur Behandlung desselben.

### Stand der Technik

Kulturgut, insbesondere Schriftgut, wie Bücher, Akten, Urkunden, Karten, Pläne etc., unterliegt einem natürlichen Zerfallsprozess, der zur Alterung bzw. zum Abbau der entsprechenden Materialien führt. Beispielsweise kann bereits nach 50 bis 100 Jahren die Stabilität von Papier so stark reduziert sein, dass eine Benutzung des Papiers aufgrund der Brüchigkeit nicht mehr möglich ist. Dadurch sind die Bestände von Kulturgut, die beispielsweise in Bibliotheken, Archiven und Museen lagern, akut bedroht.

Es wurden daher große Anstrengungen unternommen Verfahren zu entwickeln, die den natürlichen Zerfallsprozess von Kulturgut, insbesondere von Schriftgut, verhindern oder verlangsamen sollen und/oder schon bestehende Zerfallsschäden rückgängig machen können. Es ist bekannt, dass die natürlichen Zerfallsprozesse im Wesentlichen auf zwei Reaktionstypen, nämlich saure Hydrolyse und Oxidation, zurückgeführt werden können, die verschiedene Behandlungsstrategien erforderlich machen.

Bei der sauren Hydrolyse von Kulturgut, wie Papier, werden die für die Papierstabilität verantwortlichen Cellulosefasern durch die im Papier enthaltenen Säuren hydrolytisch abgebaut, wodurch das Papier brüchig wird. In den letzten Jahren wurden als papierkonservatorische und restauratorische Maßnahmen eine Reihe von Entsäuerungsverfahren entwickelt, bei denen die Säuren neutralisiert werden und gegebenenfalls eine alkalische Reserve als Langzeitschutz in die Papiere eingebracht wird. Unter anderem wurden auch Massenentsäuerungsverfahren, wie beispielsweise das in der deutschen Patentanmeldung DE 199 21 616 A1, die ebenfalls auf die Anmelderin der vorliegenden Anmeldung zurückgeht, beschriebene Verfahren, entwickelt, wodurch die Behandlung gebundener Bücher möglich wurde.

Bei dem oxidativen Abbau von Kulturgut, wie Papier, werden die Cellulosefasern neben dem oben beschriebenen Abbau durch saure Hydrolyse durch verschiedene Oxidationsreaktionen, meist radikalische Kettenreaktionen, abgebaut, wodurch holzhaltiges Papier vergilbt, versprödet oder an Reissfestigkeit einbüsst. Diese Oxidationsreaktionen laufen sowohl im sauren als auch im alkalischen Milieu und parallel zu den oben beschriebenen durch Säure katalysierten Hydrolysereaktionen ab und tragen dabei synergistisch zum Abbau des Kulturguts bei.

Im Gegensatz zu den diversen Entsäuerungsverfahren ist im Stand der Technik nur wenig über Verfahren zur antioxidativen Behandlung von Kulturgut zur Verhinderung von Oxidationsschäden bekannt. Prinzipiell wäre es möglich, das organische Material unter Ausschluß von Sauerstoff, beispielsweise in einer Argon- oder Stickstoffatmosphäre zu lagern. Dieses Verfahren ist jedoch für den praktischen Gebrauch nicht geeignet, da dadurch die Gebrauchsfähigkeit des Materials zu stark eingeschränkt wird. Ein weiteres im Stand der Technik bekanntes Verfahren ist die Verwendung von Borhydriden, insbesondere Natriumborhydrid (NaBH₄), als Reduktionsmittel für oxidativ geschädigte Cellulose (Oxicellulose) (Sobucki, W., Borhydride - wertvolle Mittel zur Restaurierung von Papier, Restauro, 260-263 (1993); Burgess, H.D., The Stabilization of Cellulosic Fibres by Borhydride Derivatives, ICOM Preprints, 447-452 (1990)). Bei diesem Verfahren werden die oxidativ gebildeten Carbonyl- und Carboxylgruppen wieder reduziert, beispielsweise zu Hydroxylgruppen, welche die Cellulosefasern untereinander wieder über intra- und intermolekulare Wasserstoffbrückenbindungen vernetzten und so das Papier gegenüber weiteren Abbaureaktionen stabilisieren können. Das Natriumborhydrid reagiert In Wasser zudem basisch und führt somit neben der Reduktion gleichzeitig zu einer Entsäuerung des Papiers. Die Kombination aus Entsäuerungs- und Reduktionsbehandlung ist eine bei der wässrigen konservatorischen Einzelblattbehandlung gängige Praxis, die vor allem bei oxidativ stark geschädigtem Papieren zu befriedigenden Ergebnissen führt (Burgess, supra).

Ein Nachteil von Natriumborhydrid ist jedoch, dass dieses nur in Wasser löslich ist und deshalb in der Massenentsäuerung nicht verwendet werden kann, da bei dieser aufgrund der mit polaren Lösungsmitteln verbundenen Risiken, wie Lösen von Leimen und Ausbluten von Schreibstoffen, nur unpolare Lösungsmittel eingesetzt werden dürfen. Als Folge davon werden in der Praxis bereits Amino-Boran-Komplexe eingesetzt, die auch in unpolaren Lösungsmitteln löslich sind (Bicchieri, M. et al., Restaurator 20, 22 (1999); Bicchieri, M. et al., Restaurator 21. 213-228 (2000)). Bei diesen Amino-Boran-Komplexen handelt es sich jedoch um Stickstoffverbindungen, die zu nicht akzeptablen Nebenerscheinungen, wie starkem Geruch und Vergilbung führen.

Antioxidationsmittel zur Stabilisierung von unterschiedlichstem organischem Material sind im Stand der Technik bekannt. Aus der US 2,294,723 ist bekannt, dass die Zugabe von sekundären Diarylamin-Antioxidatien zu trockenem Harzleim, welcher verseiftes Kolophonium oder verseifte Abietinsäure umfasst, den Harzleim wirksam gegen Oxidation schützen kann. Die FR 2,772,042 beschreibt eine Antioxidationszusammensetzung, insbesondere für Tierfuttermittel, mit (i) einem hydrophilen Bestandteil, wie z.B. Ascorbinsäure, (ii) einem lipophilen Bestandteil, wie z.B. natürliche Extrakte reich an α-Tocopherol, γ-Tocopherol, BHE, BHT und Ethoxyquinon, und (iii) Propylgallat oder Dodecylgallat sowie (iv) einem Kompexbildner mit metallischen Salzen. Eine Zusammensetzung, welche freie Radikale im Zigarettenrauch reduziert und somit die Schäden, die durch die freien Radikale verursacht werden, an den Atmungswegen und der Lunge verringern kann und welche L-Glutathion und eine Selenquelle, wie Selenomethionin, umfasst ist aus der US 5,829,449 bekannt.

### Beschreibung der Erfindung

Der vorliegenden Erfindung liegt daher die Aufgabe zugrunde alternative Antioxidationsmittel zur Behandlung von organischem Material, insbesondere Papier, bereitzustellen, welche Schädigungen aufgrund von Oxidationsreaktionen und/oder sauren Hydrolysereaktionen verhindern, verlangsamen oder rückgängig machen können und die im Stand der Technik genannten Nachteile nicht aufweisen.

Diese Aufgabe wird durch die in den Ansprüchen 1, 9 und 14 angegebenen technischen Lehren gelöst. Vorteilhafte Ausführungsformen ergeben sich aus den Unteransprüchen.

Ein erster Aspekt der vorliegenden Erfindung betrifft daher ein Antioxidationsmittel, das eine oder mehrere Verbindungen unabhängig voneinander ausgewählt aus der Gruppe bestehend aus Komplexbildnern, UV-Absorber/Quenchern, Radikalfängern, Peroxidzersetzern und Reduktionsmitteln und außerdem einen Peroxidzersetzer ausgewählt aus der Gruppe bestehend aus Halogeniden, Pseudohalogeniden und Enzymen umfasst.

Das erfindungsgemäße Antioxidationsmittel zeichnet sich dadurch aus, dass es alterungsbedingte Zerfallsprozesse von organischem Material, insbesondere von Papier, aufgrund von Oxidationsreaktionen und/oder sauren Hydrolysereaktionen aufhalten, deutlich verlangsamen oder sogar teilweise rückgängig macht. Dadurch wird die Lebensdauer der organischen Materialien deutlich verlängert und bleibt somit der Nachwelt erhalten.

Der Komplexbildner des erfindungsgemäßen Antioxidationsmittels dient zur Inaktivierung von Metallen, insbesondere Übergangsmetallen, in dem organischen Material, wie Papier, indem durch eine Komplexbildung alle Koordinationsstellen der katalysierenden Metallionen blockiert werden, wodurch die katalytische Wirkung der Metallionen verloren geht. Bei den heutzutage hergestellten Papieren gelangen die Metalle über den Produktionsprozess in das Papier und stellen insbesondere bei Recyclingpapieren, bei denen sich diese Metallionen anreichern, eine wachsende Problematik dar. Bei altem Schriftgut sind insbesondere die Eisengallustinten ein Problem, da diese neben dem Eisen(III)tannat einen Überschuss an Eisenionen, auch als Fe²⁺, enthalten, welche zusammen mit der bei der Herstellung anfallenden Schwefelsäure das Papier durch Oxidation und saure Hydrolyse zerstören ("Tintenfraß").

Vorzugsweise ist der Komplexbildner ausgewählt aus der Gruppe bestehend aus Aminopolycarbonsäuren und Polyaminocarboxylaten, wie Methylirnodiessigsäure, Ethylendiamintetraessigsäure, Diethylentriaminpentaessigsäure, Nitrilotriessigsäure, Triethylentetraminhexaessigsäure, Diethylenglycoldiaminethyltetraessigsäure, Hydroxyethylendiaminotriacetat und N,N-Di(hydroxyethyl)glycin; Phosphonaten, wie Aminopolyphosphonate/Aminotrimethylenphosphonsäure (ATMP), 1-Hydroxy-1,1-ethandiphosponsäure (HEDP), Amino-tris(methylenphosphonsäure) (ATMP), Ethylen-diamintetra(methylenphosphonsäure) (EDTMP), Diethylen-triaminpenta(methylenphosphonsäure) (DTPMP), Hexamethylen-diamintetra(methylenphosphonsäure) (HMDTMP), 2-Phosphonobutan-1,2,4-tricarbonsäure (PBTC), Glucaminbismethylenphosphonsäure, Diglucitylethylendiaminbismethylenphosphonsäure; Phosphaten und Polyphosphaten, wie Dipolyphosphat, Tripolyphosphat und P64-P70; Polyelektrolyten, wie Polyacrylsäure (PAS), Polymaleinsäure (PMS), Maleinsäuremethylvinylethercopolymer/Poly-[(4-methoxy)-tetramethylen-1,2-dicarbonsäure] Maleinsäuremethylvinylethercopolymer (CP2), Maleinsäure-Acrylsäurecopolymer/Poly-(tetramethylen-1,2,4-tricarbonsäure) Maleinsäure-Acrylsäurecopolymer (CP4), Polyoxymethylcarbonsäure/Poly-[(3-hydroxymethyl)-hexamethylen-1,3,5-tricarbonsäure] (POC), Poly-(tetramethylen-1,2-dicarbonsäure) (DMA) und Poly-[(3-oxomethyl)-hexamethylen-1,3,5-tricarbonsäure]; Makrocyclen, wie Cyclodextrinen, Calixaranen und Cryptanden; Polysacchariden und Etherderivaten davon, wie Cellulose, Stärke, Chitin, Galactomannan und Etherderivaten davon; weiteren Komplexbildnern bzw. Metallinaktivatoren, wie N-Salicylidenethylamin, N,N'-Disalicylidenethylen, Triethylendiamin, Lecitin, Thiadiazol-, Imidazol- und Pyrazol-Derivaten, Acetylaceton, Phosphorsäurederivaten, Kieselsäurederivaten, 1,4,8,11-Tetraazacyclotetradecan, 1,4,8,11-Tetramethyl-1,4,8,11-tetra-azacyclotetradecan, 1,4,8,11-Tetrathiacyclotetradecan, 1,4,7,10-Tetraoxa-acyclododecan, 5,14-Dihydrodibenzo[b,i]-1,4,8,11-tetra-azacyclotetradecen, 1,7,10,16-tetraoxa-4,13-diazacyclo-octadecan und Inositolderivaten; Hydroxycarboxylate und Alkanolamine, wie Glucoheptomat (2,3,4,5,6,7-Hexahydroxyheptansäure), Tartrat, Salicylat und Sulfosalicylat, Gluconat, Citrat, Carboxymethyloxymalonat (CMOM), O-(Carboxymethyl)-tartronsäure, Carboxymethyloxysuccinat (CMOS) und O-(Carboxymethyl)-äpfelsäure.

Besonders bevorzugt sind Phosphonate, Phosphorsäurederivate, Polyelektrolyte, Makrocyclen, Kieselsäurederivate und Inositolderivate. Am meisten bevorzugt sind Inositolderivate, beispielsweise D-myo-Inositol-1,2,3-triphosphat und D*-myo-*Inositol-1,2,3,5-tetrakisphosphat. Gemäß vorliegender Erfindung liegt bzw. liegen der Komplexbildner bzw. gegebenenfalls die Komplexbildner in einer Konzentration von 0,0001 Gew.-% bis 15 Gew.-%, insbesondere in einer Konzentration von 0,01 bis 5 Gew.-%, vor.

Der UV-Absorber/Quencher des erfindungsgemäßen Antioxidationsmittels dient zum Schutz des organischen Materials vor einer photochemischen Schädigung, indem dieser schädliche Strahlung, insbesondere UV-Strahlung im Wellenlängenbereich von 300 bis 400 nm, absorbiert und in Wärmeenergie umwandelt. Die Quencher wirken im Gegensatz zu den UV-Absorbern nicht durch Absorbieren der Strahlung sonder durch Dissipation der von Chromophoren aufgenommenen Energie, wodurch weitere chemische Reaktionen verhindert werden.

Vorzugsweise ist der UV-Absorber/Quencher ausgewählt aus der Gruppe bestehend aus Hydroxyphenylbenzotriazolen, Hydroxybenzophenonen, Formamidin, Benzyliden-Campher, phenolischen Antioxidantien, sterisch gehinderten Phenolen und sterisch gehinderten Aminen.

Besonders bevorzugt sind sterisch gehinderte Phenole, wie Octadecyl-3-(3,5-di-t-butyl-4-hydroxyphenyl)propionate, Octadecyl-3,5-di-t-butyl-4-hydroxyhydrocinnamat, Triethylenglycolbis[3,3-t-butyl-4-hydroxy-5-methylphenyl)propionate], 1,6-Hexandiolbis[3-(3,5-di-t-butyl-4-hydroxyphenylpropionat], N,N'-Trimethylenbis(3,5-di-t-butyl-4-hydroxyhydrocinnamide), N,N-Hexamethylenbis(3,5-di-t-butyl-4-hydroxyhydrocinnamide), 2,2'-Thiodiathylenbis[3-(3,5-di-t-butyl-4-hydroxyphenyl)propionat], Thiodiethylenebis-(3,5-di-t-butyl-4-hydroxy)hydrocinnamat, 2,4-Bis(n-octylthio)-6-(4-hydroxy-3,5-di-t-butylanilino)-1,3,5-triazin, 2,2'-Thiobis(4-methyl-6-t-butylphenol), 1,3,5-Trimethyl-2,4,6-tri(3,5-di-t-butyl-4-hydroxybenzyl)benzol, 1,3,5-Tri(3,5-di-t-butyl-4-hydroxybenzyl)isocyanurat, Pentaerythrityl tetrakis [3-(3,5-di-t-butyl-4-hydroxyphenyl)propionat], Diethylester der 3,5-Di-t-butyl-4-hydroxybenzylphosphonsäure, Calciumbis(3,5-di-t-butyl-4-hydroxybenzylmonoethylphosphate), Dilauryl thiodipropionat, Distearyl thiodipropionat, Phenol, 2,4-Bis(1,1-dimethylethyl), Phosphite(3:1), Phosphonous acid, [1,1'-Biphenyl]-4,4'-diylbis-, tetrakis(2,4,-bis(1,1-dimethylethyl)phenyl]ester; oder sterisch gehinderte Amine, wie Sebacinsäure-bis-2,2,6,6-tetramethyl-4-piperidylester), Poly-(N-β-hydroxyethyl-2,2,6,6-tetramethyl-4-hydroxypiperidin)-bernsteinsäureester).

Weitere besonders bevorzugte UV-Absorber/Quencher sind 3,3'-Di-t-butyl-2,2'-dihydroxy- 5,5'-dimethyldiphenylmethan, 5,5'-Di-t-butyl-4,4'-dihydroxydimethyldiphenylsulphide, 3,3'-Di-t-butyl-2,2'-dihydroxy-5,5'-diethyldiphenylmethan, 3,3'-Di(methylcyclohexyl)-2,2'-dihydroxy-5,5'-dimethyldiphenylmethan, 3,5,3',5'-Tetra-t-butyl-4,4-dihydroxydiphenylmethan, Octadecyl-3-(3,5-di-t-butyl-4-hydroxyphenyl)propionate, 1,1,3-Tri(2-t-butyl-4-hydroxy-6-methylphenyl)butan, 2,2'-Thiodiethylenbis[3-(3,5-di-t-butyl-4-hydroxyphenyl)propionat], 1,3,5-Tri(3,5.di-t-butyl-4-hydroxy)-benzyl-2,4,6-trimethylbenzol, Pentaerythrityltetrakis[3-(3,5-di-t-butyl-4-hydroxyphenyl)propionate], Didodecanyl 3,3'-thiobispropanoat, Dioctadecanyl-3,3'-thiobispropanoat, 2-(2-Hydroxy-3,5-di-t-butylphenyl)-5-chlor-2H-benzotriazol.

Gemäß der vorliegender Erfindung liegt bzw. liegen der UV-Absorber/Quencher bzw. gegebenenfalls die UV-Absorber/Quencher in einer Konzentration von 0,0001 bis 5 Gew.-%, insbesondere in einer Konzentration von 0,001 bis 2 Gew.-%, besonders bevorzugt in einer Konzentration von 0,01 bis 1 Gew.-% vor.

Der Radikalfänger des erfindungsgemäßen Antioxidationsmittels übt seine antioxidative Wirkung aus, indem er sich an das aktive Ende des Radikals anlagert, wodurch das Radikal deaktiviert wird und so keine weiteren radikalischen Kettenreaktionen auslösen kann. Vorzugsweise ist der Radikalfänger ausgewählt aus der Gruppe bestehend aus Phenolderivaten, wie Mono-, Di- und Polyphenolen, aromatischen Aminen, alkylierten Diphenylaminen, Dihydrochinolinderivaten, divalenten Schwefelderivaten, wie Dialkylestern von thiodipropionischen Säuren, dreibindigen Phosphorverbindungen. Besonders bevorzugt sind sekundäre aromatische Amine, wie p-Phenylendiamin und Diphenylamin, und dreibindige Phosphorverbindungen, deren besonderer Vorteil darin liegt dass sie in der Regel keine Verfärbungen erzeugen.

Besonders bevorzugte Radikalfänger sind Phenolderivate, wie Alkylphenole; Hydroxyphenylpropionate, wie Octadecyl-3-(3,5-di-t-butyl-4-hydroxyphenyl)-propionat, Pentaerythrityl-tetrakis-3-(3,5-di-t-butyl-4-hydroxyphenyl)-propionat); Hydroxybenzyl-Verbindungen, wie 3,5-Tris-(3,5-di-t-butyl-4-hydroxybenzyl)-mesitylen, Calcium-bis[(ethyl-(3,5-di-t-butyl-4-hydroxybenzyl)phospat], 1,3,5-Tris-(4'-t-butyl-5-hydroxy-2',6'-dimethylbenzyl)-isocyanurat, 1,3,5-Tris-(3,5-di-t-butyl-4-hydroxybenzyl)-isocyanurat); Alkylidenbisphenole, wie 1,1,3-Tris-(5-t-butyl-4-hydroxy-2-methylphenyl)-butan, Ethylenglycol-bis[3,3-bis(3'-t-butyl-4'-hydroxyphenyl)-butyrat]); Thiobisphenole; Aminophenole; Kondensationsprodukte aus 4,4'-Thio-bis(2-t-butyl-5-methylphenol); Butyihydroxyanisol; Butylhydroxytoluol; Gallussäur; Alkylgallate; Ascorbinsäure und deren Salze und Derivate, Calciumascorbat; Ascorbylpalmitat; Isoascorbinsäure und deren Salze und Derivate; 2,6-Di-tert-butyl-4-methylphenol, Pentaerythrityl-tetrakis-(2,6-di-t-butyl-4-hydroxyphenyl-propionat).

Gemäß vorliegender Erfindung liegt bzw. liegen der Radikalfänger bzw. gegebenenfalls die Radikalfänger in einer Konzentration von 0,0001 bis 5 Gew.-%, bevorzugt in einer Konzentration 0,001 bis 2 Gew.%, besonders bevorzugt In einer Konzentratiori von 0,01 bits Gew.-% vor.

Der Peroxidzersetzer des erfindungsgemäßen Antioxidationsmittels hemmt die Oxidation, indem Peroxide zu den entsprechenden Alkoholen abgebaut werden. Der Peroxidzersetzer ist aus der Gruppe bestehend aus Halogeniden, wie F, Cl, Br und I, Pseudohalogeniden, wie Cyanid, Thiocyanat (Rhodanid), Cyanat und Azid, und Enzymen, wie beispielsweise Peroxidasen, ausgewählt Besonders bevorzugt sind die Halogenide Bromid und Iodid und die Pseudohalogenide Cyanid, Thiocyanat (Rhodanid), Cyanat und Azid. Die Halogenide und Pseudohalogenide werden vorzugsweise in Form ihrer Zink-, Alkall-, Erdalkali- oder Tetraalkylammoniumsalze verwendet. Gemäß vorliegender Erfindung liegt bzw. liegen der Peroxidzersetzer bzw. gegebenenfalls die Peroxidzersetzer in einer Konzentration von 0,0001 bis 5 Gew.-%, bevorzugt in einer Konzentration von 0,001 bis 2 Gew.-%, besonders bevorzugt in einer Konzentration von 0,01 bis 1 Gew.-%, vor.

Im Rahmen der vorliegenden Erfindung können auch "stöchiometrische" Peroxidzersetzer verwendet werden, welche mit den Peroxiden unter Oxidation ihres eigenen Moleküls reagieren. Antioxidationsmittel dieser Gruppe enthalten Schwefel, wie beispielsweise Thioether, β,β'-Thiodipropionsäuredilaurylester, β,β'-Thiodipropionsäuredistearylester) und/oder Phosphor in niederen Wertigkeitsstufen, wie beispielsweise organische Phosphite, Triphenylphosphin, Diethylphosphit, Triphenylphosphit, Tris-nonylphenylphosphat, Tris-(mono/dinonylphenyl)-phosphit, Tridecylphosphit, Tri-isodecylphosphit, Tridodecylphosphit, Octyl-diphenylphosphit, Isooctyl-diphenylphosphit, Decyldiphenylphosphit, Isodecyl-diphenylphosphit, Didecyl-phenylphosphit, Diisodecylphenylphosphit, 3,5-Di-t-butyl-4-hydroxybenzylphosphonsäurediethylester, 3,5-Di-t-butyl-4-hydroxybenzylphosphonsäure-di-octadecylester, verschiedenen Zink-, Barium- und Calziumthiophosphate, Tris-(nonylphenyl)-phosphit, Distearylpentaerythritdiphosphit, Tris-(2,4-di-t-butylphenyl)-phosphit, Tetrakis-(2,4-di-t-butylphenyl)-4,4'-biphenylendiphosphonit, Tris-(nonylphenyl)-phosphit).

Das Reduktionsmittel des erfindungsgemäßen Antioxidationsmittels wirkt über eine Reduktion von bereits oxidativ geschädigter Cellulose (Oxicellulose), wodurch beispielsweise Carbonylgruppen wieder in Hydroxylgruppen überführt werden können. Dadurch wird das organische Material gegenüber weiteren Abbaureaktionen stabilisiert. Als Reduktionsmittel können meist nur wenige Mittel eingesetzt werden, da diese zu keinen unerwünschten Veränderungen des organischen Materials, wie beispielsweise eine nachteilige Veränderung des pH-Werts oder Fleckenbildung aufgrund von ausblutenden Farbstoffen, führen sollten. Das Ausbluten von Farbstoffen kann durch die Verwendung von unpolaren Lösungsmittel im Wesentlichen verhindert werden. In einem solchen Fall muss das Reduktionsmittel somit mit unpolaren Lösungsmitteln mischbar sein. Wegen diesen Anforderungen sind viele Reduktionsmittel für empfindliche organische Materialien nicht einsetzbar. Vorzugsweise ist das Reduktionsmittel ausgewählt aus der Gruppe bestehend aus Wasserstoff, Reduktonen, Thioharnstoff, Hydroxyaceton, Borhydriden, Boranen, Schwefeldioxid, Pyrosulfiten, Dithioniten, Wasserstoffsiloxanen und reduktivem Plasma. Besonders bevorzugte Reduktionsmittel sind Wasserstoffsiloxane. Gemäß vorliegender Erfindung liegt bzw. liegen das Reduktionsmittel bzw. gegebenenfalls die Reduktionsmittel in einer Konzentration von 0,001 bis 50 Gew.-%, bevorzugt in einer Konzentration von 0,01 bis 10 Gew.-%, besonders bevorzugt in einer Konzentration von 0,1 bis 5 Gew.-%, vor.

Die besonders bevorzugten als Reduktionsmittel verwendeten Wasserstoffsiloxane reagieren hauptsächlich mit Hydroxylgruppen von Wasser, Alkoholen und Cellulose und vereinzelt auch mit Aminogruppen, wodurch sich gemäß nachfolgender Reaktionsgleichung naszierender Wasserstoff bildet. Dieser kann als Reduktionsmittel Carbonylgruppen, die sich durch alterungsbedingte Oxidationsreaktionen aus Hydroxylgruppen gebildet haben, zurück zu den entsprechenden Hydroxylgruppen reduzieren, wodurch das organische Material gegenüber weiteren Abbaureaktionen stabilisiert werden kann.

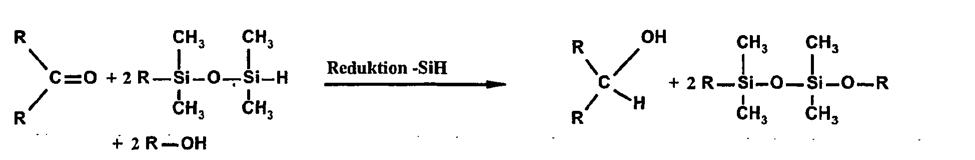

Ein Hauptvorteil der Wasserstoffsiloxane ist, dass sich diese ohne weiteres mit dem in Massenentsäuerungsverfahren, wie beispielsweise dem Papersave-Verfahren, verwendeten Entsäuerungsmittel kombinieren lassen. Dies ist darauf zurückzuführen, dass beispielsweise in dem Papersave-Verfahren die Entsäuerungsverbindung Titan-Magnesium-Ethanolat (METE) in Hexamethyldisiloxan (HMDO) als Lösungsmittel verwendet wird, mit dem die als Reduktionsmittel verwendeten Wasserstoffsiloxane in jedem Verhältnis mischbar sind. Ein weiterer Vorteil der Wasserstoffsiloxane besteht darin, dass diese Alkohole in unpolarere Silanolether umwandeln können. Dadurch wird das Risiko des Ausblutens einiger Farb- und Schreibstoffe aufgrund der bei der Behandlung entstehenden Alkohole, die insbesondere bei der Hydrolyse bestimmter Entsäuerungsmittel entstehen, minimiert.

Als bevorzugte Wasserstoffsiloxane haben sich Silane oder mono-/bifunktionelle Alkylsiloxane herausgestellt. Besonders bevorzugt ist Tetramethyldisiloxan, das zudem vergleichsweise kostengünstig kommerziell erhältlich ist. Im Gegensatz dazu sind tri- oder höher funktionelle Siloxane zur Verwendung im Rahmen der vorliegenden Erfindung ungeeignet, da diese unter Umständen dreidimensional vernetzte polymere Verbindungen bilden, die zu ungewollten Nebeneffekten führen können.

In einer bevorzugten Ausführungsform der vorliegenden Erfindung umfasst das erfindungsgemäße Antioxidationsmittel wenigstens eine der in Tabelle 1 gezeigten Verbindungen.

**Tabelle 1**

| mode of action | group or product name | chemical name | solvent | Conc. |
|---|---|---|---|---|
| Complex. agent | crown ethers | 18-crown-6 | ethanol | 0.02 M, 0.04M |
| | | 15-crown-5 | ethanol | 0.02 M, 0.04M |
| | macrocyclic ligands | hexatiacyclooctadecane | nitromethane | 0.33% w/v |
| | | hexaazacyclooctadecane | nitromethane | 0.2% w/v |
| | | | ethanol | 1 % w/v |
| | | tetrathiacyclooctadecane | nitromethane | 0,25% w/v |
| | | tetraazacyclooctadecane | nitromethane | |
| | | gallic acid | ethanol | 2% w/v |
| | irgamet 42 | ethanol, 2.2'-((methyl-1H-benzotriazol-1-yk)methyl)imino)bis- | ethanol | 1% w/v |
| | dequest 2041 | ethylenediamine tetraphosphonic acid, tetraethylammonium salt | ethanol | 0.01M |
| | | ethylenediamine tetraphosphonic acid, sodium salt | water | 0.01M |
| | dequest 2054 | Hexamethylenediamine tetra(methylene phosphonic acid), potassium salt | water | 0.01M |
| | dequest 2000 | ATMP, Amino tri (methylene-phosphonic acid), sodium salt | water | 0.01M |
| | dequest 2060 | Diethylenetriaminepenta(tnethylenephosphonic acid), | water | 0.01M |
| | phytate | myo-inositol hexaphosphoric acid, tetraetylammonium salt | ethanol | |
| | triethylene tetramine | triethylene tetramine | dichloroinethane | 1% w/v |
| | desferal | desferrioxamine mesylate | water | 0.02 M |
| | phytate | myo-inositol hexaphosphoric acid, cyclohexilammonium salt | methanol | |
| | Borchi Nox M2 | 2-butanon oxime | ethanol | 1% w/v |
| | | citosane 85/500/A4 | water | 0.05% w/v |
| | | citosane 90/20/A1 | water | 0.05% w/v |
| | | citosane 90/200/A1 | water | 0.05% w/v |
| | | dextrane 500 | water | 1% w/v |
| | | alginic acid, M:48-168000 | water | 1% w/v |
| | | carrageenan | water | 1% w/v |
| | Dequest 2016 | Sodium HEDP; 1-Hydroxyethylene-1,1,-diphosphonic acid tetra sodium salt | water | 1% w/v |
| | dequest2041 | ethylenediamine tetraphosphonic acid, hexilammonium salt | ethanol | 1% w/v |
| peroxide decomp. | iodide | potassium iodide | ethanol | 1% w/v |
| | iodide | tetrabutylammonium iodide | dichloromethane | 1% w/v |
| | rhodanide | Potassium thicyanate | water | 0.01M |
| | bromide | sodium bromide | ethanol | 1% w/v |
| | bromide | tetrabutylammonium bromide | dichloromethane | 1% w/v |
| | irgafos 168 | Cyba chem.. | chlorophorm | 100% w/v |
| | Tinogard TL | Cyba chem.. | dichloromethane | 10% w/v |
| radical scavenger | irganox 1010 | Pentaaerythrol tetrakis(3-(3,5-ditert-butyl-4-hydroxyphenyl)propionate) | dichloromethane | 10% w/v |
| | | | chlorophorm | 10% w/v |
| mixture | irganox B225 | 50% irgafos 168 and 50% irganox 1010 | dichloromethane | 10% w/v |
| | | | chlorophorm | 10% w/v |
| | carvedilol | (carbazoloyl-(4)-oxyl)-3-(2-methoxy-phenoxyl)ethylamino-2-propanol | dichloromethane | 0.15% w/v |

Gemäß der vorliegenden Erfindung sind besonders bevorzugte Antioxidationsmittel Kombinationen von wenigstens zwei oder mehreren Verbindungen aus wenigstens zwei oder mehreren Klassen von antioxidativen Verbindungen ausgewählt aus der Gruppe bestehend aus Komplexbildnern, UV-Absorber/Quenchern, Radikalfängern, Peroxidzersetzern und Reduktionsmitteln. Bevorzugt ist beispielsweise eine Mischung aus Radikalfängern und Peroxidzersetzern, welche synergistische Effekte aufweist und das zu behandelnde organische Material ausgezeichnet vor Zerfall bzw. Abbau schützt. Eine weitere besonders bevorzugte Mischung umfasst Radikalfänger, Peroxidzersetzer und Komplexbildner.

In einer besonders bevorzugten Ausführungsform der vorliegenden Erfindung umfasst das oben beschriebene Antioxidationsmittel zusätzlich ein oder mehrere Entsäuerungsmittel. Dies hat den Vorteil, dass der Zerfallsprozess des organischen Materials stärker verlangsamt werden kann als nur mit einem Antioxidationsmittel oder einem Entsäuerungsmittel alleine, die Anzahl der Prozesschritte verringert und somit Kosten eingespart werden können. Vorzugsweise ist das wenigstens eine Entsäuerungsmittel eine Erdalkalimetallverbindung. Besonders bevorzugt ist das wenigstens eine Entsäuerungsmittel Calciumcarbonat, Calciumalkoholat, carbonisiertes Calciumalkoholat, Calciumbicarbonat, Calciumhydroxid, Calcaiumoxid, Magnesiumcarbonat Magnesiumalkoholat, carbonisiertes Magnesiumalkoholat, Magnesiumbicarbonat, Magnesiumhydroxid, Magnesiumoxid oder Mischungen davon. Vorzugsweise liegt das wenigstens eine Entsäuerungsmittel in einer Konzentration von 0,0001 bis 10 Gew.-%, besonders bevorzugt in einer Konzentration von 0,1 bis 3 Gew.-%, vor.

Gemäß vorliegender Erfindung ist ein weiteres bevorzugtes Antioxidationsmittel eine Kombination von Wasserstoffsiloxanen, insbesondere Tetramethyldisiloxan, und einem Entsäuerungsmittel.

Das erfindungsgemäße Antioxidationsmittel kann in einem Lösungsmittel gelöst, dispergiert oder emulgiert vorliegen. Als Lösungsmittel, in dem das erfindungsgemäße Antioxidationsmittel gelöst, dispergiert oder emulgiert ist, kommen im Prinzip alle Lösungsmittel in Frage. Bevorzugte Lösungsmittel sind Wasser, Alkohole, Kohlenwasserstoffe, insbesondere Alkane und Cycloalkane, siliciumorganische Verbindungen, wie Siloxane, halogenierte Kohlenwasserstoffe, wie Fluorkohlenwasserstoffe, Chlorkohlenwasserstoffe, Fluorchlorkohlenwasserstoffe, und flüssige oder überkritische Gase, insbesondere flüssiges oder überkritisches Kohlendioxid. Als besonders bevorzugte Lösungsmittel haben sich unpolare, organische, aprotische Lösungsmittel, wie Alkane, halogenierte Kohlenwasserstoffe oder Methylsiloxane, erwiesen, da diese nicht zu einem Verschmieren des zu behandelnden organischen Materials, insbesondere des Schriftguts, durch ausblutende Farben und Tinten führen.

Die Gesamtkonzentration des in einem der beschriebenen Lösungsmittel gelösten erfindungsgemäßen Antioxidationsmittel ist vorzugsweise so gering wie möglich zu wählen und liegt in Abhängigkeit vom zu behandelnden organischen Material und des verwendeten Antioxidationsmittels vorzugsweise im Bereich von 0,0001 bis 25 Gew.-%, insbesondere im Bereich von 0,001 bis 5 Gew.-%. Liegt das erfindungsgemäße Antioxidationsmittel in Form eines Aerosoles, Gases, Staub oder Pulver vor, kann die Konzentration zwischen 0,0001 bis 100 Gew.-% betragen.

Vorzugsweise ist das erfindungsgemäße Antioxidationsmittel für organisches Material ausgewählt aus Textil-Cellulose, Seide, Wolle, Leder, Pergament, Holz, Papier, Karton und Gemälden und anderen Kunstobjekten zugrunde liegenden Materialien gedacht, jedoch nicht auf diese beschränkt. Besonders bevorzugt ist das organische Material Papier, insbesondere Schriftgut auf Papierbasis, wie Bücher, Akten, Urkunden, Karten, Pläne, Plakate etc. sowie Schriftgut auf Pergamentbasis.

Ein zweiter Aspekt der vorliegenden Erfindung betrifft ein Verfahren zur Behandlung von organischem Material, bei dem das organische Material mit einem erfindungsgemäßen Antioxidationsmittel in Kontakt gebracht wird.

Vorzugsweise erfolgt das erfindungsgemäße Verfahren bei einer Temperatur von 0 bis 100°C und insbesondere bei 5 bis 55°C. Besonders bevorzugt beträgt die Temperatur 15 bis 35°C.

Der Druck liegt, außer bei der Verwendung von flüssigen Gasen und überkritischen Gasen, vorzugsweise im Bereich von 0,001 bis 3 bar. Besonders bevorzugt beträgt der Druck 0,1 bis 1,5 bar. Bei der Verwendung von flüssigen Gasen und überkritischen Gasen beträgt der Druck bis zu 300 bar.

Des Weiteren ist es bevorzugt, dass das Verfahren in einer sauerstofffreien oder sauerstoffarmen Atmosphäre erfolgt. Besonders bevorzugt besteht die Atmosphäre aus Stickstoff, Kohlendioxid, Edelgas, insbesondere Argon oder einer Mischung davon.

Die Behandlungsdauer des erfindungsgemäßen Verfahrens beträgt vorzugsweise 1 min bis 72 h, insbesondere 5 min bis 24 h und am meisten bevorzugt 10 min bis 3 h.

In einer weiteren Ausführungsform der vorliegenden Erfindung wird das organische Material mit einem erfindungsgemäßen Antioxidationsmittel, das kein Entsäuerungsmittel enthält, in Kontakt gebracht, wobei das organische Material vor oder nach dem Inkontaktbringen mit einem oder mehreren Entsäuerungsmitteln behandelt wird.

Vor oder nach dem Behandeln mit dem erfindungsgemässen Antioxidationsmittel mit oder ohne einem oder mehreren zusätzlichen Entsäuerungsmitteln kann das organische Material gegebenenfalls auf andere Art und Weise behandelt werden, beispielsweise gereinigt, stabilisiert, fixiert, etc., werden.

Die Antioxidationsmittel können dabei in festem Zustand, wie in Form eines Pulvers oder Staubes, in flüssigem Zustand, wie in Form von Lösungen von polaren oder unpolaren Lösungsmitteln und überkritischen Gasen, insbesondere überkritischem Kohlendioxid, Dispersionen, Emulsionen und Suspension oder in gasförmigem Zustand in Form von Gasen und Aerosolen auf und in das zu behandelnde organische Material gebracht werden. Als Lösungsmittel kommen dabei die oben erwähnten Lösungsmittel in Betracht.

Das dem erfindungsgemäßen Verfahren zugrunde liegende Antioxidationsmittel kann in Abhängigkeit von dem zu behandelnden Material mittels verschiedener Applikationsverfahren auf das zu behandelnde organische Material aufgetragen werden. Hierbei kommen im Falle des festen Auf-/Eintrags vorzugsweise das Besprühen mit einer Düse, das Einsaugen mittels Unterdruck, die Auftragung mit Pinseln, Schwämmen und Kompressen und technische Verfahren zum Einbringen von Pulvern und Stäuben in Betracht. Im Fall des flüssigen Auf-/Eintrags sind vorzugsweise Tränken, insbesondere Vakuumtränkung, Besprühen/Benebeln, Auftragung mit Pinseln, Schwämmen, Kompressen geeignet. Im Falle des gasförmigen Auf-/Eintrags wird vorzugsweise eine Begasung oder das Applizieren von Aerosolen mittels Düsen und anderen geeigneten technischen Vorrichtungen angewendet.

Vorzugsweise ist das organische Material ausgewählt aus Textil-Cellulose, Seide, Wolle, Leder, Pergament, Holz, Papier, Karton und Gemälden und anderen Kunstobjekten zugrunde liegenden Materialien, jedoch nicht auf diese beschränkt. Besonders bevorzugt ist das organische Material Papier, insbesondere Schriftgut auf Papierbasis, wie Bücher, Akten, Urkunden, Karten, Pläne, Plakate, etc., sowie Schriftgut auf Pergamentbasis.

Ein dritter Aspekt der vorliegenden Erfindung betrifft die Verwendung des erfindungsgemäßen Antioxidationsmittels zur Behandlung von organischem Material, insbesondere organischem Material ausgewählt aus Textil-Cellulose, Seide, Wolle, Leder, Pergament, Holz, Papier, Karton und Gemälden und anderen Kunstobjekten zugrunde liegenden Materialien, wobei Papier, insbesondere Schriftgut auf Papierbasis, wie Bücher, Akten, Urkunden, Karten, Pläne, Plakate, etc. sowie Schriftgut auf Pergamentbasis besonders bevorzugt ist.

Die vorliegende Erfindung wird nachfolgend durch die Figuren 1 bis 9 und Beispiele bevorzugter Ausführungsformen näher erläutert.

### Figuren

Figur 1 zeigt die Ergebnisse des Beispiels 1.
Figur 2 und Figur 3 zeigen die Ergebnisse des Beispiels 2.
Figuren 4, 5 und 6 zeigen die Ergebnisse des Beispiels 3.
Figur 7 zeigt die Ergebnisse des Beispiels 4.
Figur 8 zeigt die Strukturen der Inositol-Derivate MS-22 und MS-23.
Figur 9 zeigt die Ergebnisse des Beispiels 5.

### Beispiele

### Beispiel 1

### Verwendung von Halogeniden und Pseudohalogeniden zur Oxidationshemmung

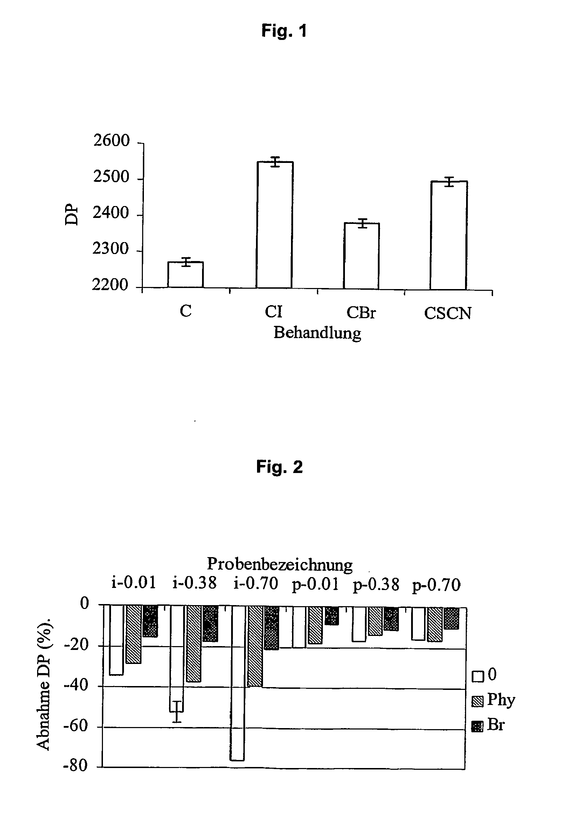

In diesem Beispiel wurde der hemmende Effekt der Halogenide Kaliumiodid (KI) und Natriumbromid (NaBr) sowie des Pseudohalogenids Kaliumrhodanid (KSCN), welche als Peroxidzersetzer wirken, auf die Alterung von entsäuerter Cellulose in alkalischem Milieu untersucht. Die Versuche wurden mit Whatman-Filterpapier Nr. 1 (86,0 g/m², Polymerisationsgrad (DP): 2630) durchgeführt. Nach der Entsäuerung mit einer 0,01 M wässrigen Lösung aus Ca(HCO₃)₂ wurden die Proben getrocknet und für 5 min in eine wässrige Lösung der Antioxidationsmittel (KI, NaBr, KSCN) getaucht. Anschließend wurden diese Proben in einer Vötsch Klimakammer vom Typ VC 0020 bei einer Temperatur von 80°C und einer relativen Feuchtigkeit von 65% während 48 Tagen künstlich gealtert. Die Ergebnisse sind in Fig. 1 gezeigt, wobei C den Polymerisationsgrad (DP) nach Entsäuerung mit Ca(HCO₃)₂, und Cl, CBr sowie CSCN den Polymerisationsgrad nach Behandlung mit den Antioxidationsmitteln Kl, NaBr bzw. KSCN darstellt. Die Fehlerbalken markieren die Standardabweichung.

Wie aus Fig. 1 ersichtlich führt jedes der drei verwendeten Antioxidantien zu einer Verbesserung der Stabilität, nach der Alterung in der Reihenfolge I⁻>SCN⁻>Br. Somit kann im alkalischen Milieu eine effektive Stabilisierung durch die Behandlung mit Halogeniden, wie Cl und Br und Pseudohalogeniden, wie SCN, erreicht werden.

### Beispiel 2

### Wirksamkeit von Halogeniden im Vergleich zu bislang verwendeten Phytaten, Abnahme des Polymerisationsgrades und der Helligkeit L* nach Alterung

Dieses Experiment dient dem Vergleich der Wirksamkeit zwischen Halogenen und Phytaten. Es wird die Abhängigkeit des Polymerisationsgrades und der Helligkeit von der Zusammensetzung der Tinte nach Alterung gezeigt. Dazu wurden drei modellhafte Eisen-Gallus-Tinten mit einem molarem Verhältnis Cu : Fe von 0.01, 0.38 und 0.70 auf ein ausgewähltes Papier aufgetragen. Die so hergestellten Proben wurden entweder mit Kalziumhydrogencarbonat allein entsäuert (C) oder in einer Kombination aus Kalziumhydrogencarbonat und Kalziumammoniumphytat (Phy) zusätzlich antioxidativ behandelt. Die Proben mit Bromid (Br) wurden erhalten, indem nur entsäuerte Papiere in einem weiteren Schritt in einer 1 %-igen wässrigen Tetrabutylammoniumbromidlösung getränkt wurden.

Die in Fig. 2 dargestellten Polymerisationsgrade nach Entsäuerung, antioxidativer Behandlung und 12 Tagen dynamischer Alterung von Tinte enthaltendem (i-) und Tinte umgebendem (p-) Papier demonstrieren, dass Phytat Tinten stabilisiert, welche neben Eisen auch erhebliche Mengen anderer Übergangsmetallionen enthalten. Somit kann Phytat für wässrige Stabilisierungen von historischen Tinten verwendet werden. Die gezeigten Ergebnisse beweisen aber vor allem die überragende Stabilisierung nach Verwendung von Bromid gegenüber der bislang verwendeten Kombination aus Entsäuerung und Phytatbehandlung. Weiterhin wurde der DP von Tinte umgebendem Papier bestimmt. Auch hier konnte gezeigt werden, dass Bromid eine deutlich Verbesserung der Stabilität bewirkt. Diese Resulte sind insofern wichtig, da bei wässrigen Behandlungen die Möglichkeit der Migration von Übergangsmetallionen in benachbarte Bereiche besteht.

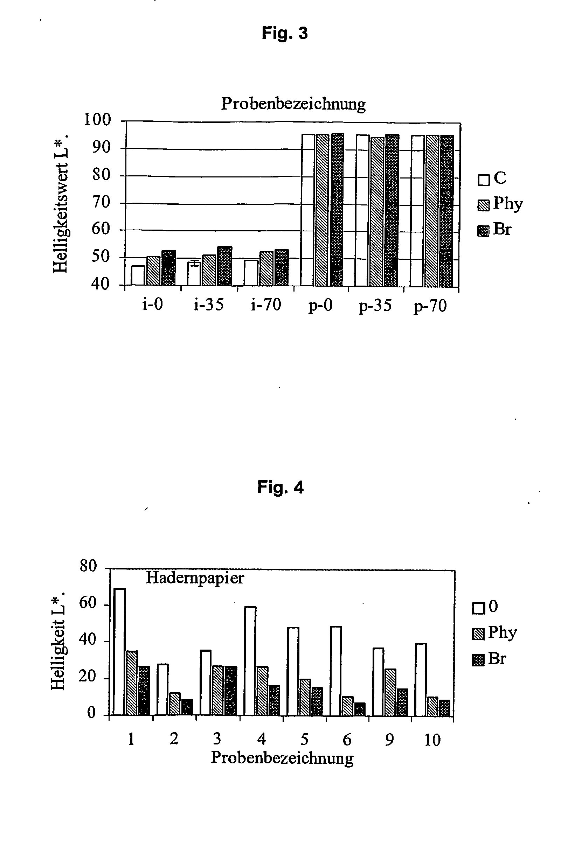

Zur Evaluierung der Benutzbarkeit von Bromiden für eine Stabilisierung von historischen Papieren ist deren Effekt auf die Farben von Tinte und Papier besonders wichtig. Die Ergebnisse einer solchen Studie sind deshalb in Fig. 3 dargestellt. Zur Betrachtung der Effekte wurde die Abnahme der Helligkeit L* des CIE L*a*b*-Farbsystems nach 12 Tagen dynamischer Alterung von Tinte enthaltendem (i-) und Tinte umgebenden (p-) Papier herangezogen. Die Entsäuerung wurde durchgeführt durch Tränkung in Ca(HCO₃)₂-Lösung. Papiere ohne Antioxidantien (C) wurden mit einer Phytat- (Phy) und einer Bromidbehandlung (Br) verglichen.

Während die unbehandelte Probe nach Alterung etwas an Helligkeit verlor (L* vor Alterung = 49,1), wurden Proben durch die Phytat- und Bromidbehandlung etwas aufgehellt. Bei der Auswertung des die Tinte umgebenden Papiers wurden dahingegen keine signifikanten Unterschiede gefunden.

### Beispiel 3

### Wirksamkeit von Halogeniden im Vergleich zu den bislang verwendeten Phytaten anhand von Originalen, Abnahme des Helligkeitswertes L* nach dynamischer Alterung

Mehrere Originale aus Hadernpapier verschiedener Herkunft, welche allesamt mit Eisen-Gallus-Tinte beschrieben waren, wurden unter dynamischen Bedingungen für 123 Tage gealtert (90°C, RH 30-80 %). Die Proben wurden entweder unbehandelt (O), antioxidativ mit Phytat behandelt (Phy) oder mit Kalziumcarbonat entsäuert und danach antioxidativ mit Tetrabutylammoniumbromid behandelt.

Nach der Alterung wurde einerseits die Abnahme der Helligkeit L* (CIE L*a*b*-Farbsystem) des Papieres (ohne Tinte) in Abhängigkeit von der Behandlung gemessen (Fig. 4). In allen 10 Proben wurde eine Abnahme des Helligkeitswertes L* in der Reihenfolge 0 > Phy > Br beobachtet. Wenn anstelle von Phytat das Bromid verwendet wurde, kam es bei einigen Papieren sogar zu einer erheblich geringeren Abnahme der Helligkeit.

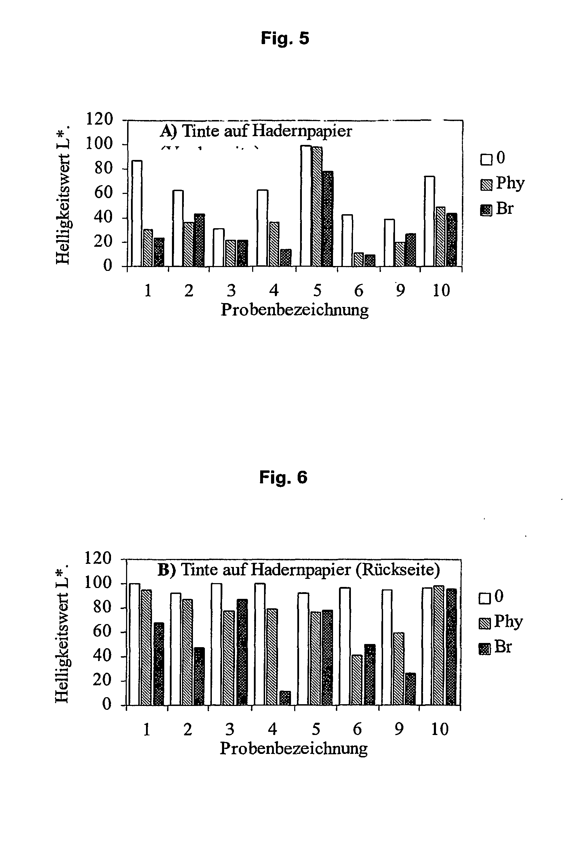

Auch in den mit Tinte beschriebenen Bereichen der gealterten Originale wurde die Abnahme der Helligkeit L* gemessen. Dabei wurde unterschieden in die mit Tinte benetzte Vorderseite A) und der nicht beschriebenen Rückseite B), auf welcher die Tinte nur durchscheint. Die Ergebnisse dieser Untersuchungen sind in Fig. 5 und Fig. 6 gezeigt, wobei die Messung von L* auf der Vorderseite von besonderer Bedeutung als Indikator für den Gesamtzustand des Objektes ist.

Der Vergleich der Messungen zeigt, dass die meisten Tinten sich wie die Papiere verhalten und die Abnahme der Helligkeit in Abhängigkeit von der Behandlung zu derselben Reihe führt (O>Phy>Br). Einige der mit Bromid behandelten Tinten zeigen ebenfalls eine wesentlich geringere Abnahme von L* als die mit Phytat behandelen. Im Gegensatz zum unbeschriebenen Hadernpapier wurde aber bei einigen Tinten auch eine geringfügig erhöhte Abnahme von L* nach Behandlung mit Bromid beobachtet.

### Beispiel 4

### Kombination einer Entsäuerung mit Applikation eines Antioxidants und Vergleich derselben mit einer unbehandelten sowie einer entsäuerten Probe, jeweils ohne antioxidative Behandlung, Abnahme des Polymerisationsgrades nach dynamischer Alterung

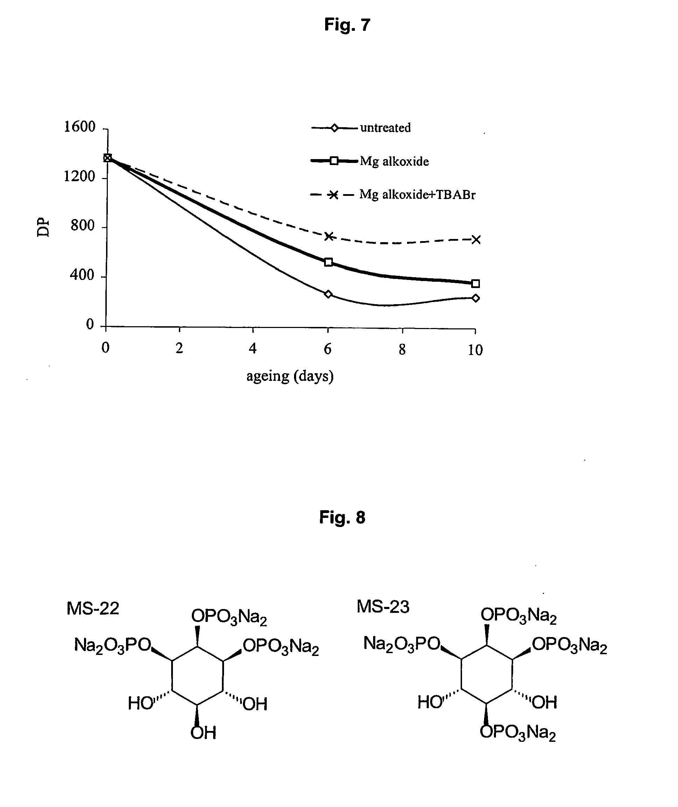

In den bisherigen Untersuchungen wurde die stabilisierende Wirkung der Bromide bewiesen, solange diese in wässriger Lösung appliziert wurden. In diesem Beispiel soll daher die Anwendung von Halogenen und Pseudohalogenen in unpolarer Lösung gezeigt werden, zumal diese Applikationsform für die Kombination mit modernen Entsäuerungsverfahren entscheidend ist. Aus diesem Grunde wurden ausgewählte Papiere mit 0,01 M Magnesiumalkoxid in Ethanol entsäuert und ein Teil dieser Papiere anschließend mit einer 1 % w/v Lösung von Tetrabutylammoniumbromid in Methylenchlorid behandelt. Zur Darstellung des stabilisierenden Effektes wurde der DP einer solchen Probe mit einer unbehandelten und einer entsäuerten Probe ohne antioxidative Behandlung nach Alterung verglichen. Die dynamische Alterung (90°C, RH 30-80 %) erfolgte für bis zu 10 Tage, die Ergebnisse sind in Fig. 7 dargestellt.

Diese zeigen, dass mit der Kombination einer Entsäuerung und einer antioxidativen Behandlung hervorragende Ergebnisse bei der Stabilisierung von Tintenfraß geschädigten Papieren erreicht werden.

### Beispiel 5

### Stabilisierende Wirkung von neuen, synthetischen Inositolderivaten

Zur Erweiterung der in wässrigen Behandlungen stabilisierend wirkenden Phytate wurden ausgehend vom myo-Inositol weitere Derivate synthetisiert. Diese sind im Gegensatz zu den nur wasserlöslichen Phytaten auch in unpolaren Lösungsmitteln löslich und daher auch in modernen Stabilisierungsverfahren anwendbar. In diesem Beispiel sollen deshalb stellvertretend für die *myo*-Inositol-Derivate die Wirkung von *D*-myo-Inositol-1,2,3-trisphosphat (MS-22) und *D*-myo-Inositol-1,2,3,5-tetrakisphosphat (MS-23) beschrieben werden.

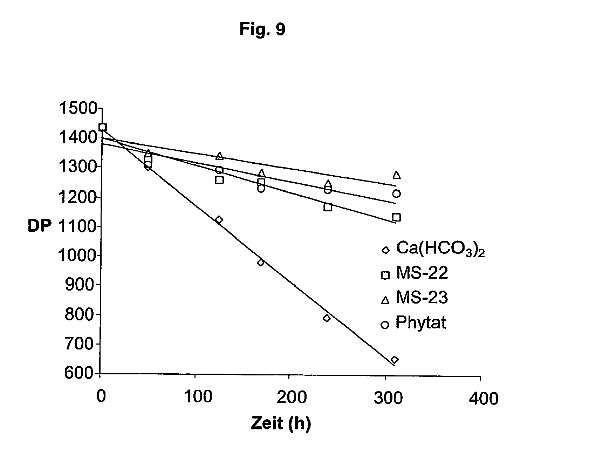

Die zweifach mit 0.01 M Kalziumhydrogencarbonat für je 30 min entsäuerten Papiere wurden entweder ohne weitere Behandlung oder für 2x15 min in 1.4x10⁻²M wässrigen Lösungen von Phytat, MS-22 bzw. MS-23 getränkt. Anschließend wurden alle Proben für bis zu 310 Stunden gealtert. Wie in Fig. 9 dargestellt wird, haben die *myo*-Inositol-Derivate in diesen Untersuchungen eine ähnliche Aktivität wie die Phytate. Somit wird auch mit diesen neuartigen Verbindungen eine hohe stabilisierende Wirkung erzielt. Da diese Derivate jedoch auch in unpolareren Lösungsmitteln angewendet werden können, erweitert sich ihr Einsatzgebiet gegenüber Phytat in erheblichem Maße.

### Beispiel 6

### Verwendung von Tetramethyldisiloxan in Verbindung mit einem Entsäuerungsmittel zur reduktiven Behandlung und Entsäuerung von oxidativ geschädigtem saurem Papier

Für die folgenden Versuche wurde ein durch natürliche Alterung bereits stark geschädigtes Zeitungspapier verwendet (Handelsblatt aus dem Jahre 1954). Das Zeitungspapier wurde in einer Pilotanlage nach dem bekannten Papersave-Verfahren behandelt, wobei der Entsäuerungslösung jedoch 1 Gew.-% Tetramethyldisiloxan zugegeben wurde. Die Kontaktzeit der Behandlungslösung mit dem zu behandelnden organischen Material wurde dabei im Vergleich zu den bei der Entsäuerung mit dem Papersave-Verfahren verwendeten üblichen 30 min auf 5 h verlängert. Der Effekt der Behandlung wurde durch eine 90-tägige künstliche Alterung (80°C/65% relative Feuchtigkeit) mit Hilfe von Reißfestigkeitsmessungen (Reißkraft in Newton (N)) bestimmt. Verglichen wurde die Reißfestigkeit des entsäuerten und mit Tetramethyldisiloxan behandelten Papiers mit den Reißfestigkeiten von unbehandeltem und entsäuertem Papier. Die Ergebnisse sind in Tabelle 2 gezeigt.

**Tabelle 2**

| | *Reißfestigkeit nach 90-tägiger Alterung [N]* |
|---|---|
| Unbehandeltes Papier | 14,0 |
| Entsäuertes Papier | 23,4 |
| Entsäuertes und mit Tetramethyl-disiloxan behandeltes Papier | 31,8 |

Aus den in Tabelle 2 gezeigten Daten ist ersichtlich, dass die durch die Entsäuerung gewonnene Stabilität durch die gleichzeitige reduktive Behandlung mit Tetramethyldisiloxan beträchtlich verbessert werden kann.

## Patentansprüche

1. Antioxidationsmittel für organisches Material, welches ein oder mehrere Verbindungen unabhängig voneinander ausgewählt aus der Gruppe bestehend aus Komplexbildnern, UV-Absorber/Quenchern, Radikalfängern und Reduktionsmitteln umfasst,
**dadurch gekennzeichnet, daß**
das Antioxidationsmittel außerdem einen Peroxidzersetier, ausgewählt aus der Gruppe bestehend aus Halogeniden, Pseudohalogeniden und Enzymen, enthält.

2. Antioxidationsmittel für organisches Material nach Anspruch 1,
**dadurch gekennzeichnet, daß**
der Komplexbildner ausgewählt ist aus der Gruppe bestehend aus Aminopolycarbonsäuren und Polyaminocarboxylaten, Phosphonaten, Phosphaten und Polyphosphaten, Polyelektrolyten, Makrocyclen, Polysacchariden und Etherderivaten davon, Hydroxycarboxylaten und Alkanolaminen, N-Salicylidenethylamin, N,N'-Disalicylidenethylen, Triethylendiamin, Lecitin, Thiadiazol-, Imidazol- und Pyrazol-Derivaten, Phosphorsäurederivaten, Kieselsäurederivaten und Inositolderivaten.

3. Antioxidationsmittel für organisches Material nach Anspruch 1,
**dadurch gekennzeichnet, daß**
der UV-Absorber/Quencher ausgewählt ist aus der Gruppe bestehend aus Hydroxyphenylbenzotriazolen, Hydroxybenzophenonen, Formamidin, Benzyliden-Campher, phenolische Antioxidantien, sterisch gehinderten Phenolen und sterisch gehinderten Aminen.

4. Antioxidationsmittel für organisches Material nach Anspruch 1,
**dadurch gekennzeichnet, daß**
der Radikalfänger ausgewählt ist aus der Gruppe bestehend aus Phenolderivaten, aromatischen Aminen, alkylierten Diphenylaminen, Dihydrochinolinderivate, divalenten Schwefelderivaten, dreibindigen Phosphorverbindungen.

5. Antioxidationsmittel für organisches Material nach Anspruch 1,
**dadurch gekennzeichnet, daß**
das Reduktionsmittel ausgewählt ist aus der Gruppe bestehend aus Wasserstoff, Reduktonen, Thioharnstoff, Hydroxyaceton, Borhydriden, Boranen, Schwefeldioxid, Pyrosulfiten, Dithioniten, Wasserstoffsiloxanen und reduktivem Plasma.

6. Antioxidationsmittel für organisches Material nach einem der Ansprüche 1 bis 5, **dadurch gekennzeichnet, daß**
das Antioxidationsmittel zusätzlich ein oder mehrere Entsäuerungsmittel umfasst.

7. Antioxidationsmittel für organisches Material nach Anspruch 6,
**dadurch gekennzeichnet, daß**
das Entsäuerungsmittel eine Erdalkalimetallverbindung umfasst.

8. Antioxidationsmittel für organisches Material nach einem der Ansprüche 1 bis 7, **dadurch gekennzeichnet, daß**
das organische Material Papier ist.

9. Verfahren zur Behandlung von organischem Material,
**dadurch gekennzeichnet, daß**
das organische Material bei einer Temperatur von 0 bis 100°C, einem Druck von 0,001 bis 300 bar in einer sauerstoffarmen Atmosphäre für 1 Minute bis 72 Stunden mit einem Antioxidationsmittel gemäß einem der Ansprüche 1 bis 8 in Kontakt gebracht wird.

10. Verfahren zur Behandlung von organischem Material nach Anspruch 9,
**dadurch gekennzeichnet, daß**
das organische Material bei einer Temperatur von 0 bis 100 °C, einem Druck von 0,001 bis 300 bar in einer sauerstoffarmen Atmosphäre für 1 Minute bis 72 Stunden mit einem Antioxidationsmittel gemäß einem der Ansprüche 1 bis 5 in Kontakt gebracht wird, wobei das organische Material vor oder nach dem Inkontaktbringen mit einem oder mehreren Entsäuerungsmitteln behandelt wird.

11. Verfahren zur Behandlung von organischem Material nach Anspruch 10,
**dadurch gekennzeichnet, daß**
das Entsäuerungsmittel eine Erdalkalimetallverbindungen umfasst.

12. Verfahren zur Behandlung von organischem Material nach einem der Ansprüche 9 bis 11,
**dadurch gekenntzeichnet, daß**
das organische Material Papier ist.

13. Verfahren zur Behandlung von organischem Material nach einem der Ansprüche 9 bis 12,
**dadurch gekennzeichnet, daß**
das organische Material Schriftgut ist.

14. Verwendung eines Antioxidationsmittels gemäß einem der Ansprüche 1 bis 8 zur Behandlung von organischem Material.

15. Verwendung nach Anspruch 14,
**dadurch gekennzeichnet, daß**
das organische Material Papier ist.

16. Verwendung nach Anspruch 14 oder 15,
**dadurch gekennzeichnet, daß**
das organische Material Schriftgut ist.

## Claims

1. An antioxidant for organic material which comprises one or more compounds mutually independently selected from the group consisting of complexing agents, UV absorbers/quenchers, free-radical scavengers and reducing agents, **characterised in that**
the antioxidant moreover contains a peroxide decomposer selected from the group consisting of halides, pseudohalides and enzymes.

2. An antioxidant for organic material according to claim 1,
**characterised in that**
the complexing agent is selected from the group consisting of aminopolycarboxylic acids and polyaminocarboxylates, phosphonates, phosphates and polyphosphates, polyelectrolytes, macrocycles, polysaccharides and ether derivatives thereof, hydroxycarboxylates and alkanolamines, N-salicylideneethylamine, N,N'-disalicylideneethylene, triethylenediamine, lecithin, derivatives of thiadiazole, imidazole and pyrazole, phosphoric acid derivatives, silicic acid derivatives and inositol derivatives.

3. An antioxidant for organic material according to claim 1,
**characterised in that**
the UV absorber/quencher is selected from the group consisting of hydroxyphenylbenzotriazoles, hydroxybenzophenones, formamidine, benzylidene camphor, phenolic antioxidants, sterically hindered phenols and sterically hindered amines.

4. An antioxidant for organic material according to claim 1,
**characterised in that**
the free-radical scavenger is selected from the group consisting of phenol derivatives, aromatic amines, alkylated diphenylamines, dihydroquinoline derivatives, divalent sulfur derivatives, trivalent phosphorus compounds.

5. An antioxidant for organic material according to claim 1,
**characterised in that**
the reducing agent is selected from the group consisting of hydrogen, reductones, thiourea, hydroxyacetone, borohydrides, boranes, sulfur dioxide, pyrosulfites, dithionites, hydrogen siloxanes and a reducing plasma.

6. An antioxidant for organic material according to any one of claims 1 to 5,
**characterised in that**
the antioxidant additionally comprises one or more deacidifying agents.

7. An antioxidant for organic material according to claim 6,
**characterised in that**
the deacidifying agent comprises an alkaline earth metal compound.

8. An antioxidant for organic material according to any one of claims 1 to 7,
**characterised in that**
the organic material is paper.

9. A method for treating organic material, **characterised in that**
the organic material is brought into contact with an antioxidant according to any one of claims 1 to 8 for 1 minute to 72 hours in an oxygen-depleted atmosphere at a temperature of 0 to 100°C and a pressure of 0.001 to 300 bar.

10. A method for treating organic material according to claim 9,
**characterised in that**
the organic material is brought into contact with an antioxidant according to any one of claims 1 to 5 for 1 minute to 72 hours in an oxygen-depleted atmosphere at a temperature of 0 to 100°C and a pressure of 0.001 to 300 bar, the organic material being treated with one or more deacidifying agents before or after being brought into contact.

11. A method for treating organic material according to claim 10,
**characterised in that**
the deacidifying agent comprises an alkaline earth metal compound.

12. A method for treating organic material according to any one of claims 9 to 11,
**characterised in that**
the organic material is paper.

13. A method for treating organic material according to any one of claims 9 to 12,
**characterised in that**
the organic material is documents.

14. Use of an antioxidant according to any one of claims 1 to 8 for treating organic material.

15. Use according to claim 14,
**characterised in that**
the organic material is paper.

16. Use according to claim 14 or claim 15, **characterised in that**
the organic material is documents.

## Revendications

1. Agent anti-oxydant pour une matière organique qui comprend un ou plusieurs composés choisis indépendamment les uns des autres dans le groupe comprenant les agents complexants, les absorbants/agents bloquants des UV, les piégeurs de radicaux libres et les agents de réduction,
**caractérisé en ce que**
l'agent anti-oxydant contient en outre un agent de décomposition du peroxyde choisi dans le groupe comprenant les halogénures, les pseudo-halogénures et les enzymes.

2. Agent anti-oxydant pour une matière organique selon la revendication 1,
**caractérisé en ce que**
l'agent complexant est choisi dans le groupe comprenant les acides aminopolycarboxyliques et les polyaminocarboxylats, les phosphonates, les phosphates et les polyphosphates, les polyélectrolytes, les macrocycles, les polysaccharides et les dérivés d'éther de ceux-ci, les hydroxycarboxylates et les alcanolamines, la N-salicylidène-éthylamine, la N,N'-disalicylidène-éthylène, la triéthylène-diamine, la lécithine, les dérivés de thiadiazole, d'imidazole et de pyrazole, les dérivés d'acide phosphorique, les dérivés d'acide silicique et les dérivés d'inositol.

3. Agent anti-oxydant pour une matière organique selon la revendication 1,
**caractérisé en ce que**
l'absorbant/agent bloquant des UV est choisi dans le groupe comprenant les hydroxyphénylbenzotriazols, les hydroxybenzophénones, la formamidine, le benzylidène-camphre, les anti-oxydants phénoliques, les phénols à empêchement stérique et les amines à empêchement stérique.

4. Agent anti-oxydant pour une matière organique selon la revendication 1,
**caractérisé en ce que**
le piégeur de radicaux est choisi dans le groupe comprenant les dérivés phénoliques, les amines aromatiques, les diphénylamines alkylées, les dérivés de dihydroquinoline, les dérivés de soufre divalents, les composés de phosphore à trois liaisons.

5. Agent anti-oxydant pour une matière organique selon la revendication 1,
**caractérisé en ce que**
l'agent de réduction est choisi dans le groupe comprenant l'hydrogène, les réductones, la thio-urée, l'hydroxyacétone, les borohydrures, les boranes, le dioxyde de soufre, les pyrosulfites, les dithionites, les hydrogénosiloxanes et le plasma réducteur.

6. Agent anti-oxydant pour une matière organique selon l'une des revendications 1 à 5,
**caractérisé en ce que**
l'agent anti-oxydant comprend en outre un ou plusieurs agents de désacidification.

7. Agent anti-oxydant pour une matière organique selon la revendication 6,
**caractérisé en ce que**
l'agent de désacidification comprend un composé de métal alcalinoterreux.

8. Agent anti-oxydant pour une matière organique selon l'une des revendications 1 à 7,
**caractérisé en ce que**
la matière organique est du papier.

9. Procédé de traitement d'une matière organique, **caractérisé en ce que**
la matière organique est mise en contact à une température de 0 à 100° C, à une pression de 0,001 à 300 bars dans une atmosphère pauvre en oxygène pendant 1 minute à 72 heures, avec un agent anti-oxydant selon l'une des revendications 1 à 8.

10. Procédé de traitement d'une matière organique selon la revendication 9,
**caractérisé en ce que**
la matière organique est mise en contact à une température de 0 à 100° C, à une pression de 0,001 à 300 bars dans une atmosphère pauvre en oxygène pendant 1 minute à 72 heures, avec un agent anti-oxydant selon l'une des revendications 1 à 5, la matière organique étant traitée avant ou après la mise en contact avec un ou plusieurs agents de désacidification.

11. Procédé de traitement d'une matière organique selon la revendication 10,
**caractérisée en ce que**
l'agent de désacidification comprend un composé de métal alcalino-terreux.

12. Procédé de traitement d'une matière organique selon l'une des revendications 9 à 11,
**caractérisé en ce que**
la matière organique est du papier.

13. Procédé de traitement d'une matière organique selon l'une des revendications 9 à 12,
**caractérisé en ce que**
la matière organique est un document.

14. Utilisation d'un agent anti-oxydant selon l'une des revendications 1 à 8, pour le traitement d'une matière organique.

15. Utilisation selon la revendication 14, **caractérisée en ce que**
la matière organique est du papier.

16. Utilisation selon la revendication 14 ou 15, **caractérisée en ce que**
la matière organique est un document.
